# EUROPÄISCHE PATENTSCHRIFT

(11) **EP 3 502 388 B1**
(45) Veröffentlichungstag und Bekanntmachung des Hinweises auf die Patenterteilung: **07.04.2021**
(21) Anmeldenummer: 18211917.2
(22) Anmeldetag: 12.12.2018
(51) Int. Cl.: E05F 1/10, E05F 15/622

(54) **KLAPPENANORDNUNG FÜR EIN FAHRZEUG**
DOOR ASSEMBLY FOR A VEHICLE
AGENCEMENT D'OUVRANT POUR UN VÉHICULE

(30) Priorität: 22.12.2017 DE 102017131058
(43) Veröffentlichungstag der Anmeldung: 26.06.2019
(73) Patentinhaber: Stabilus GmbH, 56070 Koblenz (DE)
(72) Erfinder: Mülhöfer, Gerd, 56759 Laubach (DE); Rennecke, Dirk, 56626 Andernach (DE)
(74) Vertreter: Klein, Thomas

(56) Entgegenhaltungen:
- EP-A1- 0 334 253
- DE-A1- 10 144 791
- DE-A1-102014 117 454
- US-A1- 2012 000 304

## Beschreibung

Die Erfindung bezieht sich auf eine Klappenanordnung für ein Fahrzeug, mit einer Klappe und mit einem linearen Stellantrieb, wobei die Klappe von dem Stellantrieb von einer Geschlossenstellung gegen die Schwerkraft der Klappe in eine Offenstellung um eine Schwenkachse schwenkbar antreibbar ist und mit einer auf die Klappe unterstützend einwirkenden Federanordnung, wobei der Stellantrieb ein mit seinem einen Ende an einem Bauteil der Karosserie des Fahrzeugs angelenktes Gehäuse aufweist, aus dessen anderem Ende eine Stellstange ausfahrbar ist, deren äußeres Ende in einem radialen Abstand zur Schwenkachse an der Klappe angelenkt ist, wobei die Federanordnung eine Druckfeder aufweist, die mit ihrem einen Ende an dem Gehäuse des Stellantriebs abgestützt ist.

Bei derartigen Klappenanordnungen für ein Fahrzeug ist es bekannt, daß die Federanordnung über den gesamten Hub der Klappe einwirkt. Dies ist zwar beim Öffnungshub unterstützend. Beim Schließhub muß aber die Kraft der Federanordnung zusätzlich überwunden werden.

Aus der DE 101 44 791 A1 ist eine Klappenanordnung der eingangs genannten Art bekannt, bei der eine eine Kolbenstange des Stellantriebs umschließende Druckfeder mit ihrem einen Ende an dem Gehäuse des Stellantriebs abgestützt ist. Ein an dem freien Ende der Kolbenstange angeordneter Teller gelangt im Endbereich des Schließhubes in Anlage an das andere Ende der Druckfeder und komprimiert diese im Endschließhub.

Aus der US 2012/000304 A1 ist eine Klappenanordnung der eingangs genannten Art bekannt, der einen als Spindeltrieb ausgebildeten Stellantrieb aufweist, der an einer Fahrzeugkarosserie angeordnet ist. Eine eine Spindel des Spindeltriebs umschließende Schraubendruckfeder ist von einen Führungsrohr umschlossen, das durch Schweißen mit dem Gehäuse des Stellantriebs fest verbunden ist. Mit ihrem einen Ende ist die Druckfeder an dem Gehäuse des Stellantriebs abgestützt und beaufschlagt mit ihrem anderen Ende permanent eine Klappe.

Aus der EP 0 334 253 A1 ist eine Klappenanordnung bekannt, bei der an dem mit einer Klappe gelenkig verbundenen freien Ende einer Kolbenstange einer Gasfeder einer Federanordnung fest angeordnet, die eine die Kolbenstange umschließende Schraubendruckfeder aufweist. Das dem Zylinder der Gasfeder nähere Ende der Schraubendruckfeder ist an einer fest mit der Kolbenstange verbundenen ersten Abstützscheibe abgestützt. Das dem Zylinder der Gasfeder entfernte Ende der Schraubendruckfeder ist an einer zweiten Abstützscheibe abgestützt, die auf der Kolbenstange verschiebbar angeordnet ist.

Aufgabe der Erfindung ist es daher eine Klappenanordnung für ein Fahrzeug der eingangs genannten Art zu schaffen, die bei einfachem Aufbau eine zusätzliche Kraftüberwindung beim Schließhub der Klappe vermeidet.

Diese Aufgabe wird erfindungsgemäß dadurch gelöst, daß die Federanordnung eine separate Funktionsgruppe bildend an dem klappenseitigen Endbereich des Gehäuses des Stellantriebs lösbar angeordnet ist und die Druckfeder mit ihrem anderen Ende in einem Anfangsöffnungswinkel der Klappe < 10° auf die Klappe einwirkt sowie in der Geschlossenstellung der Klappe von der Klappe unter Vorspannung gehalten ist, wobei die Federanordnung ein hülsenartiges Federgehäuse aufweist, das mit seinem dem Gehäuse zugewandten Endbereich an dem Gehäuse des Stellantriebs anordenbar ist, wobei der dem Gehäuse zugewandte Endbereich des Federgehäuses auf das gleichen Querschnitt aufweisende klappenseitige Ende des Gehäuses aufsteckbar ist und wobei das hülsenartige Federgehäuse eine ringscheibenartige Stützwand aufweist, die an dem Gehäuse des Stellantriebs abstützbar ist und an der die Druckfeder mit ihrem dem Gehäuse des Stellantriebs zugewandten Ende in Anlage ist.

Der Stellantrieb kann z.B. ein Spindeltrieb oder eine hydraulische oder pneumatische Kolben-Zylinder-Einheit sein.

Bei dieser Ausbildung erfolgt eine Unterstützung des Öffnungshubes nur zu Beginn des Öffnungshubes, also nur dann, wenn eine zusätzliche Unterstützung erforderlich ist. Der erforderliche Kraftaufwand im weiteren Öffnungshub ist wesentlich geringer und benötigt keine weitere Unterstützung. Ein zusätzlich zu überwindender Widerstand ist nur am Ende des Schließhubes vorhanden. Dies wirkt aber auch als Schutzfunktion gegen ein zu kräftiges ungedämpftes mechanisches Anschlagen der Klappe in der Geschlossenstellung.

Die lösbare Anordnung der eine separate Funktionsgruppe bildenden Federanordnung an dem Gehäuse ermöglicht es denselben Stellantrieb sowohl mit als auch ohne Federanordnung zu verwenden sowie bereits vorhandene Stellantriebe mit einer Federvorrichtung nachzurüsten. Auch kann eine defekte Federvorrichtung leicht ausgetauscht werden bei Beibehaltung des Stellantriebs. Dabei ist die Federanordnung durch eine einfache Steckmontage einfach in der richtigen Einbaulage anordenbar. Weiterhin kann ein und derselbe Stellantrieb mit unterschiedlichen Federvorrichtungen versehen werden, die sich z. B. in der Kraft der Druckfeder und/oder dem Anfangsöffnungswinkel unterscheiden können.

Durch den einfachen und robusten Aufbau der Federanordnung ist diese weitestgehend wartungsfrei, arbeitet weitestgehend geräuschfrei und kann aufgrund ihrer einfachen Bauteile kostengünstig hergestellt werden. Weisen alle Elemente der Federanordnung zur Stellstange koaxiale Durchführöffnungen auf, durch die die Stellstange hindurchragt, so kann die Federanordnung Bauraum sparend symmetrisch an dem Gehäuse des Stellantriebs angeordnet werden.

Um Verschleiß durch Reibung der Druckfeder an der Klappe zu vermeiden kann die Druckfeder über ein Druckelement auf die Klappe einwirken.

In einfacher und kostengünstiger Ausbildung kann die Druckfeder eine Schraubendruckfeder sein.

Zum Schutz der Druckfeder gegen äußere Einflüsse kann das Federgehäuse eine von der Stützwand aus sich koaxial von dem Gehäuse weg erstreckende Führungshülse aufweisen, in der die Druckfeder angeordnet ist.

Ist das Druckelement in der Führungshülse verschiebbar angeordnet, wobei die Führungshülse einen den Maximalhub des Druckelements begrenzenden Anschlag aufweist, so wird auf einfache Weise der Anfangsöffnungswinkel der Klappe bestimmt.

Eine einfache Steckmontage ist dadurch möglich, daß der dem Gehäuse zugewandte Endbereich des Federgehäuses auf das den gleichen Querschnitt aufweisende klappenseitige Ende des Gehäuses aufsteckbar ist.

Zur einfachen Fixierung der Federanordnung an dem Gehäuse des Stellantriebs kann der dem Gehäuse zugewandte Endbereich des hülsenartigen Federgehäuses form- und/oder kraftschlüssig in seiner Aufstecklage auf dem klappenseitigen Ende des Gehäuses fixierbar sein. Damit sind zur Fixierung keine Werkzeuge erforderlich.

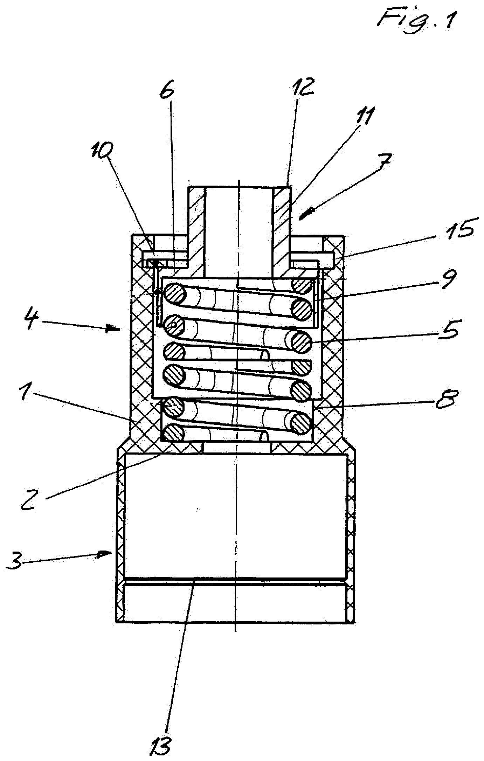

Ein Ausführungsbeispiel der Erfindung ist in der Zeichnung dargestellt und wird im Folgenden näher beschrieben. Es zeigen
- Figur 1: einen Längsschnitt einer Federanordnung einer Klappenanordnung für ein Fahrzeug
- Figur 2: einen Längsschnitt eines Federgehäuses der Federanordnung nach Figur 1
- Figur 3: einen vergrößerten Ausschnitt "X" aus Figur 2.

Die in den Figuren dargestellte Federanordnung weist ein vorzugsweise aus einem Kunststoff bestehendes hülsenartiges Federgehäuse 1 auf, dessen Innenraum etwa mittig von einer sich rechtwinklig zur Längserstreckung des Federgehäuses 1 sich erstreckenden ringscheibenartigen Stützwand 2 unterteilt ist.

Der einem nicht dargestellten Gehäuse eines Stellantriebs zugewandte Endbereich 3 des Federgehäuses 1 weist einen Querschnitt auf, der dem Querschnitt des klappenseitigen Endbereichs des Gehäuses des Stellantriebs entspricht, so daß das Federgehäuse 1 mit seinem Endbereich 3 auf den klappenseitigen Endbereich des Gehäuses aufsteckbar ist.

Zur Fixierung des Federgehäuses 1 an dem klappenseitigen Endbereich des Gehäuses des Stellantriebs besitzt der Endbereich 5 an seiner Innenseite einen radial umlaufenden Rastansatz 13, der in der Einbaulage des Federgehäuses 1 in eine entsprechende radial umlaufende Rastnut am klappenseitigen Endbereich des Gehäuses des Stellantriebs einrastet. Damit wird die Federanordnung form- und kraftschlüssig an dem klappenseitigen Endbereich des Gehäuses des Stellantriebs gehalten.

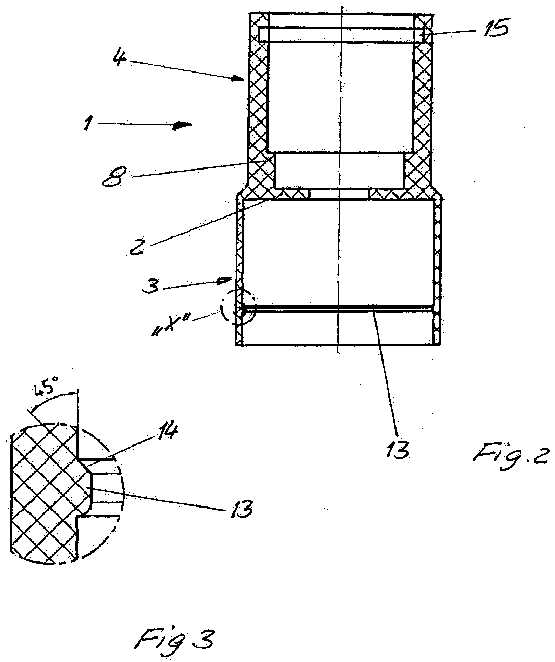

Wie insbesondere in Figur 3 zu sehen ist, ist die der Stützwand 2 nähere Seitenwand 14 des Rastansatzes 13 sich von radial außen nach radial innen von der Stützwand 2 entfernend geneigt, so daß eine Demontage der Federanordnung von dem Gehäuse des Stellantriebs erleichtert ist.

Das Federgehäuse 1 weist eine von der Stützwand 2 aus sich entgegengesetzt zum Endbereich 3 erstreckende Führungshülse 4 auf, in der eine vorzugsweise vorgespannte Schraubendruckfeder 5 angeordnet ist.

Mit ihrem einen Ende ist die Schraubendruckfeder 5 an der Stützwand 2 und mit ihrem anderen Ende an einer Radialerweiterung 6 eines hülsenartigen Druckelements 7 in Anlage.

Das dem Endbereich 3 zugewandte Ende der Schraubendruckfeder 5 ist in einer Stufe 8 reduzierten Durchmessers der Führungshülse 4 geführt, die einen annähernd gleichen Durchmesser wie die Schraubendruckfeder 5 aufweist.

Das Druckelement 7 weist eine sich koaxial zur Stützwand 2 gerichtete hülsenartige Aufnahme 9 auf, in der das andere Ende der Schraubendruckfeder 5 geführt ist.

Durch die Schraubendruckfeder 5 wird die Radialerweiterung 6 gegen einen Anschlag kraftbeaufschlagt, der durch einen Sicherungsring 10 gebildet ist, der in eine an der Innenwand der Führungshülse 4 radial umlaufend ausgebildete Ringnut 15 eingesetzt ist.

Am Ende ihres Schließhubes gelangt die Klappe in Anlage an das freie Ende de Druckelements 7, das mit seinem hülsenartigen Bereich 11 um ein solches Maß aus der Führungshülse 4 herausragt, um das die nicht dargestellte Klappe am Ende ihres Schließhubes das Druckelement 7 unter Kompression der Schraubendruckfeder 5 in die Führungshülse 4 hineinverschieben kann, bis die Klappe auf dem Mündungsrand 12 der Führungshülse 4 zur Anlage gelangt. Dieser Verschiebeweg des Druckelements 7 entspricht einem Winkel von <10°, was für eine spätere Öffnungsbewegung dem Öffnungswinkel entspricht, in dem eine Öffnung der Klappe durch den Stellantrieb von der Federanordnung unterstützt wird.

### Bezugszeichenliste

- 1: Federgehäuse
- 2: Stützwand
- 3: Endbereich
- 4: Führungshülse
- 5: Schraubendruckfeder
- 6: Radialerweiterung
- 7: Druckelement
- 8: Stufe
- 9: Aufnahme
- 10: Sicherungsring
- 11: hülsenartiger Bereich
- 12: Mündungsrand
- 13: Rastansatz
- 14: Seitenwand
- 15: Ringnut

## Patentansprüche

1. Klappenanordnung für ein Fahrzeug, mit einer Klappe **und mit einem** linearen Stellantrieb, wobei die Klappe von dem Stellantrieb von einer Geschlossenstellung gegen die Schwerkraft der Klappe in eine Offenstellung um eine Schwenkachse schwenkbar antreibbar ist und mit einer auf die Klappe unterstützend einwirkenden Federanordnung, wobei der Stellantrieb ein mit seinem einen Ende an einem Bauteil der Karosserie des Fahrzeugs angelenktes Gehäuse aufweist, aus dessen anderem Ende eine Stellstange ausfahrbar ist, deren äußeres Ende in einem radialen Abstand zur Schwenkachse an der Klappe angelenkt ist, wobei die Federanordnung eine Druckfeder aufweist, die mit ihrem einen Ende an dem Gehäuse des Stellantriebs abgestützt ist.
wobei die Druckfeder (5) mit ihrem anderen Ende in einem Anfangsöffnungswinkel der Klappe < 10° auf die Klappe einwirkt sowie in der Geschlossenstellung der Klappe von der Klappe unter Vorspannung gehalten ist,
**dadurch gekennzeichnet , dass** die Federanordnung eine separate Funktionsgruppe bildend an dem klappenseitigen Endbereich des Gehäuses des Stellantriebs lösbar angeordnet ist, wobei die Fe-Klappe von der Klappe under vorspannung gemäben ist, wobei die Federanordnung ein hülsenartiges Federgehäuse (1) aufweist, das mit seinem dem Gehäuse zugewandten Endbereich an dem Gehäuse des Stellantriebs angeordnet ist, wobei der dem Gehäuse zugewandte Endbereich (3) des Federgehäuses (1) auf das den gleichen Querschnitt aufweisende klappenseitige Ende des Gehäuses aufgesteckt ist, und
wobei das hülsenartige Federgehäuse (1) eine ringscheibenartige Stützwand (2) aufweist, die an dem Gehäuse des Stellantriebs abstützbar ist und an der die Druckfeder mit ihrem dem Gehäuse des Stellantriebs zugewandten Ende in Anlage ist.

2. Klappenanordnung nach Anspruch 1, **dadurch gekennzeichnet, daß** alle Elemente der Federanordnung zur Stellstange koaxiale Durchführöffnungen aufweisen, durch die die Stellstange hindurchragt.

3. Klappenanordnung nach einem der vorhergehenden Ansprüche, **dadurch gekennzeichnet, daß** die Druckfeder über ein Druckelement (7) auf die Klappe einwirkt.

4. Klappenanordnung nach einem der vorhergehenden Ansprüche, **dadurch gekennzeichnet, daß** die Druckfeder eine Schraubendruckfeder (5) ist.

5. Klappenanordnung nach einem der vorhergehenden Ansprüche, **dadurch gekennzeichnet, daß** das Federgehäuse (1) eine von der Stützwand (2) aus sich koaxial von dem Gehäuse weg erstreckende Führungshülse (4) aufweist, in der die Druckfeder angeordnet ist.

6. Klappenanordnung nach Anspruch 5, **dadurch gekennzeichnet, daß** das Druckelement (7) in der Führungshülse (4) verschiebbar angeordnet ist, wobei die Führungshülse (4) einen den Maximalhub des Druckelements (7) begrenzenden Anschlag aufweist.

7. Klappenanordnung nach einem der vorhergehenden Ansprüche, **dadurch gekennzeichnet, daß** der dem Gehäuse zugewandte Endbereich (3) des hülsenartigen Federgehäuses (1) form- und/oder kraftschlüssig in seiner Aufstecklage auf dem klappenseitigen Ende des Gehäuses fixierbar ist.

## Claims

1. Flap assembly for a vehicle, having a flap and having a linear actuator drive, wherein the flap by way of the actuator drive is pivotably drivable about a pivot axis counter to the gravity of the flap from a closed position to an opened position, and having a spring assembly that acts in a supporting manner on the flap, wherein the actuator drive has a housing that by way of one end thereof is articulated on a component of the body of the vehicle, an actuator rod being deployable from the other end of said housing, the external end of said actuator rod being articulated on the flap at a radial spacing from the pivot axis, wherein the spring assembly has a compression spring which by way of one end thereof is supported on the housing of the actuator drive, wherein the compression spring (5) by way of the other end thereof acts on the flap at an initial opening angle of the flap < 10° and, in the closed position of the flap, is held so as to be pretensioned by the flap, **characterized in that** the spring assembly is releasably disposed on the flap-side end region of the housing of the actuator drive so as to form a separate functional group, wherein the spring assembly has a sleeve-type spring housing (1) which, by way of the end region thereof that faces the housing, is disposed on the housing of the actuator drive, wherein the end region (3) of the spring housing (1) that faces the housing is plug-fitted onto the flap-side end of the housing that has the same cross section, and wherein the sleeve-type spring assembly (1) has an annular-disc-type support wall (2) which is capable of being supported on the housing of the actuator drive and on which the compression spring, by way of the end thereof that faces the housing of the actuator drive, bears.

2. Flap assembly according to Claim 1, **characterized in that** all elements of the spring assembly have passage openings which are coaxial with the actuator rod and through which the actuator rod protrudes.

3. Flap assembly according to either of the preceding claims, **characterized in that** the compression spring acts on the flap by way of a compression element (7).

4. Flap assembly according to one of the preceding claims, **characterized in that** the compression spring is a coil compression spring (5).

5. Flap assembly according to one of the preceding claims, **characterized in that** the spring housing (1) has a guide sleeve (4) which in a coaxial manner extends from the support wall (2) away from the housing, and in which the compression spring is disposed.

6. Flap assembly according to Claim 5, **characterized in that** the compression element (7) is disposed so as to be displaceable in the guide sleeve (4), wherein the guide sleeve (4) has a detent that delimits the maximum stroke of the compression element (7).

7. Flap assembly according to one of the preceding claims, **characterized in that** the end region (3) of the sleeve-type spring housing (1) that faces the housing is capable of being fixed in a formfitting and/or force-fitting manner in the plug-fitted position of said end region (3) to the flap-side end of the housing.

## Revendications

1. Agencement de trappe pour un véhicule, comprenant une trappe et un actionneur linéaire, la trappe pouvant être entraînée par l'actionneur, à l'encontre de la force de gravité de la trappe, d'une position fermée à une position ouverte en pivotant autour d'un axe de pivotement, et comprenant un agencement de ressort agissant pour assister la trappe, dans lequel l'actionneur présente un boîtier articulé par l'une de ses extrémités sur un élément de la carrosserie du véhicule et de l'autre extrémité duquel une tige de réglage peut être extraite dont l'extrémité extérieure est articulée sur la trappe à une distance radiale par rapport à l'axe de pivotement, dans lequel l'agencement de ressort présente un ressort de compression qui s'appuie par l'une de ses extrémités sur le boîtier de l'actionneur, le ressort de compression (5) agissant sur la trappe par son autre extrémité selon un angle d'ouverture initial de la trappe < 10°, et étant maintenu sous précontrainte par la trappe dans la position fermée de la trappe,
**caractérisé en ce que** l'agencement de ressort est disposé de manière amovible sur la zone d'extrémité côté trappe du boîtier de l'actionneur en constituant un groupe fonctionnel séparé, dans lequel l'agencement de ressort présente un boîtier de ressort (1) en forme de douille qui est disposé sur le boîtier de l'actionneur par sa zone d'extrémité tournée vers le boîtier, la zone d'extrémité (3), tournée vers le boîtier, du boîtier de ressort (1) étant emboîtée sur l'extrémité côté trappe du boîtier ayant la même section transversale, et le boîtier de ressort (1) en forme de douille présentant une paroi porteuse (2) en forme de rondelle qui peut s'appuyer sur le boîtier de l'actionneur et contre laquelle s'applique le ressort de compression par son extrémité tournée vers le boîtier de l'actionneur.

2. Agencement de trappe selon la revendication 1, **caractérisé en ce que** tous les éléments de l'agencement de ressort présentent des ouvertures traversantes coaxiales par rapport à la tige de réglage et à travers lesquelles la tige de réglage fait saillie.

3. Agencement de trappe selon l'une quelconque des revendications précédentes, **caractérisé en ce que** le ressort de compression agit sur la trappe par l'intermédiaire d'un élément de pression (7).

4. Agencement de trappe selon l'une quelconque des revendications précédentes, **caractérisé en ce que** le ressort de compression est un ressort de compression hélicoïdal (5).

5. Agencement de trappe selon l'une quelconque des revendications précédentes, **caractérisé en ce que** le boîtier de ressort (1) présente une douille de guidage (4) s'éloignant coaxialement du boîtier à partir de la paroi porteuse (2) et dans laquelle est disposé le ressort de compression.

6. Agencement de trappe selon la revendication 5, **caractérisé en ce que** l'élément de pression (7) est disposé de manière coulissante dans la douille de guidage (4), la douille de guidage (4) présentant une butée limitant la course maximale de l'élément de pression (7).

7. Agencement de trappe selon l'une quelconque des revendications précédentes, **caractérisé en ce que** la zone d'extrémité (3), tournée vers le boîtier, du boîtier de ressort (1) en forme de douille peut être fixée par complémentarité de forme et/ou par adhérence dans sa position emboîtée sur l'extrémité côté trappe du boîtier.
